# EUROPÄISCHE PATENTANMELDUNG

(11) **EP 0 850 748 A2**
(43) Veröffentlichungstag der Anmeldung: **01.07.1998**
(21) Anmeldenummer: 97121276.6
(22) Anmeldetag: 04.12.1997
(51) Int. Cl.: B29C 65/34, B29C 65/02, G01S 5/14

(54) **Anordnung mit einem Schweissgerät**

(30) Priorität: 23.12.1996 DE 19654122
(71) Anmelder: Friatec Aktiengesellschaft, 68229 Mannheim (DE)
(72) Erfinder: Schmitz, Konrad Georg, 69126 Heidelberg (DE)
(74) Vertreter: Schmitt, Meinrad, Dipl.-Ing.

(57) **Zusammenfassung**

Eine Anordnung enthält ein Schweißgerät, mittels welchem insbesondere Strom, Spannung und Zeit eines Schweißvorganges vorgebbar und speicherbar sind, wobei das Schweißgerät (2) einen Speicher und/oder Rechner (6) aufweist. Die Anordnung soll dahingehend weitergebildet werden, daß eine genaue Identifizierung des protokollierten Schweißvorganges funktionssicher ermöglicht wird. Es wird vorgeschlagen, daß den Schweißdaten die Positionsdaten eines Ortungssystems zugeordnet werden.

## Beschreibung

Die Erfindung bezieht sich auf eine Anordnung mit einem Schweißgerät gemäß den im Oberbegriff des Patentanspruchs 1 angegebenen Merkmalen.

Ein Elektro-Schweißgerät der genannten Art ist aus dem US-Patent 5 130 518 bekannt und gelangt insbesondere zum Elektroschweißen von Muffen oder Armaturen mit Rohren aus thermoplastischem Kunststoff zum Einsatz. Das Schweißgerät ermöglicht das Speichern der schweißtechnischen Parameter, und die Dokumentation der erfolgten Schweißung kann bedarfsweise ausgedruckt werden, wobei ferner eine Datenübertragung auf einen Rechner, insbesondere Personalcomputer oder Laptop, ermöglicht ist. Das Schweißgerät enthält ein rechnergestütztes Befehlssystem zur vollautomatischen Steuerung und Kontrolle des Schweißvorganges. Beim Verlegen einer Rohrleitung wird eine Vielzahl von Muffen, Armaturen und dergleichen verschweißt und die Erfassung und Protokollierung der Schweißdaten sowie die Zuordnung zur jeweiligen Schweißstelle erfordert einen erheblichen Aufwand. Es gibt Anwendungsfälle, in welchen diese Daten zur genauen Identifizierung nicht ausreichen. Die Zuordnung kann infolge von ungenauen Eingaben schon nach kurzer Zeit Probleme bereiten. Die Verwaltung und Speicherung der Datenmengen ist aufwendig und stehen schon nach kurzer Zeit in der Praxis für Überprüfungen und Wartungsmaßnahmen nicht mehr zur Verfügung oder lassen eine ein-deutige Zuordnung zu dem betreffenden Fitting, Armatur oder dergleichen nicht mehr mit der erforderlichen Sicherheit zu.

Der Erfindung liegt daher die Aufgabe zugrunde, die Anordnung mit dem Schweißgerät der genannten Art dahingehend weiterzubilden, daß die aufgezeigten Nachteile vermieden wurden und eine funktionssichere, genaue Identifizierung des protokollierten Schweißvorganges funktionssicher ermöglicht wird. Die Anordnung soll bei einfacher Handhabung eine definierte Zuordnung und Lokalisierung der einzelnen Schweißvorgänge sicherstellen. Der Aufwand für die Speicherung und Datenverarbeitung soll auf ein Minimum reduziert werden. Die Daten sollen auch nach langer Zeit von 10 und mehr Jahren eine eindeutige Zuordnung und Lokalisierung des betreffenden Fittings, Armaturen oder dergleichen ermöglichen.

Die Lösung dieser Aufgabe erfolgt gemäß den im Patentanspruch 1 angegebenen Merkmalen.

Die erfindungsgemäße Anordnung zeichnet sich durch einen funktionsgerechten Aufbau aus und gewährleistet die Zuordnung der geographischen Daten des jeweiligen Schweißvorganges. Mit den geographischen Koordinaten, vorzugsweise den Längen- und Breitengraden, werden insbesondere die Schweiß- und Verarbeitungsdaten und / oder eine Jobnummer ergänzt. Diese Jobnummer definiert nach vorgebbaren Kriterien, insbesondere eine Baustelle oder ein Projekt, bei welchem die Verschweißung von Rohrleitungen, Fittings, Armaturen oder dergleichen mittels des Elektro-Schweißgerätes durchgeführt wird. Ein Benutzer der Schweißgerätes kann diese Jobnummer zusätzlich zu den während des Schweißvorganges anfallenden Daten in das Schweißgerät, bevorzugt mittels nummerischer oder alpha-nummerischer Eingabe oder über einen Strichcode oder dergleichen eingeben. Die Dokumentation der Schweißvorgänge wird aufgrund der geographischen Koordinaten erheblich verbessert, so daß auch nach langen Zeiträumen eine eindeutige Identifizierung und Zuordnung der protokollierten Daten und eine erhöhte Zuverlässigkeit erreicht ist. In zweckmäßiger Weise wird das Schweißgerät einem Ortungssystem zugeordnet, welches vorzugsweise als ein Satellitenortungssystem ausgebildet ist und als Global-Positioning-System, kurz GPS, bezeichnet wird. Dem Schweißgerät ist ein Empfänger zugeordnet, mittels welchem insbesondere die Signale der Satelliten empfangen werden und hieraus die Position auf der Erdoberfläche ermittelt wird. Aus den Daten werden Breitengrad und Längengrad und in zweckmäßiger Weise auch die Höhe über dem Meerespiegel und die Zeit bestimmt. Die derart erhaltenen Positionsdaten werden mit den den jeweiligen Schweißvorgang maßgeblichen Daten bzw. Parametern erfaßt und kombiniert und auf einem Speichermedium gespeichert.

Im Rahmen der Erfindung kann das Ortungssystem entweder zusätzlich oder alternativ zu dem Satellitenortungssystem mit einem lokalen Ortungssystem, beispielsweise für die Verkehrsüberwachung, kombiniert werden oder als ein lokales Ortungssystem aus-gebildet sein. Des weiteren kann das Positionierungssystem mit anderen Daten, wie insbesondere Straßenplänen oder Verlegungsplänen, gespeist und bei Bedarf korrigiert werden, um so eine exakte Positionsbestimmung bzw. Ortung des Schweißgerätes zu gewährleisten. Die genannten Daten, also die Schweißdaten ebenso wie die Positionsdaten, werden zweckmäßig in einem Rechner oder Speicher verarbeitet und gespeichert. Zur Auswertung werden diese Daten vorzugsweise mittels einer Übergabeeinheit abgefragt und gespeichert. So können die Daten mittels der Übergabeeinheit problemlos an der Baustelle abgefragt werden und nach Überbringung der Übergabeeinheit zu einem Dokumentationszentrum oder Rechenzentrum oder Büro dort in der erforderlichen Weise in einen Rechner eingelesen und weiterverarbeitet werden.

Weiterbildungen und besondere Ausgestaltungen der Erfindung sind in den Unteransprüchen sowie der nachfolgenden Beschreibung eines Ausführungsbeispieles angegeben.

Die Erfindung wird nun anhand eines besonderen Ausführungsbeispiels näher erläutert, ohne daß hierdurch eine Einschränkung der Erfindung erfolgt.

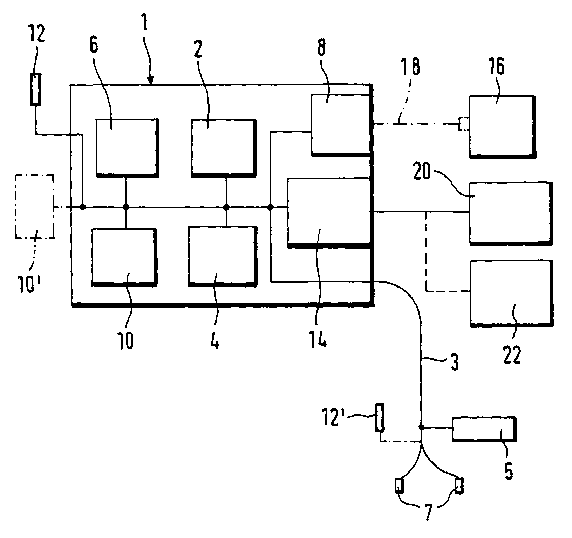

Die Zeichnung zeigt schematisch als Blockdiagramm ein Elektro-Schweißgerät 1, welches die bekannte Elektronikeinheit 2 mit einer Steuerung und Leistungselektronik für das Elektroschweißen enthält, wobei mittels eines Schweißkabels 3 die elektrische Verbindung herstellbar ist. Mittels eines derartigen Schweißgerätes 1 können vor allem in Rohrleitungssystemen aus thermoplastischem Kunststoff Schweißverbindungen zwischen Fittings oder Armaturen sowie den Kunststoffrohren hergestellt werden, wobei die Stromzuführung über das Schweißkabel 3 erfolgt. Des weiteren können mit derartigen Schweißgeräten Schweißverbindungen von Kunststoffplatten oder Kunststoff-Folien, beispielsweise zum Abdichten von Bauwerken oder Deponien, hergestellt werden. Zur Erfassung der relevanten Schweißdaten, wie Temperatur, Typenbezeichnung, Schweißstrom, Spannung, Schweißdauer usw., enthält das Schweißgerät 2 eine Erfassungseinheit 4 und / oder eine Leseeinheit 5 sowie einen Speicher 6. Die Leseeinheit 5 ist in zweckmäßiger Weise ebenso wie die Stecker oder Kontakte 7 am Ende bzw. am Endbereich des Schweißkabels 3 angeordnet, um die auf einem Datenträger des Fittings, Armatur oder dergleichen vorgesehenen Daten lesen zu können. Der mit dem Fitting oder dergleichen fest verbundene Datenträger ist im Rahmen der Erfindung als ein Strichcode bzw. Barcode, eine Magnetkarte, ein Microchip oder dergleichen ausgebildet. Die den jeweiligen Schweißvorgang kennzeichnenden Parameter werden im Speicher 6 bereitgehalten und können bei Bedarf über einen Datenanschluß 8, beispielsweise eine parallele Schnittstelle auf ein Modem oder ähnliches, nach außen übertragen oder abgefragt werden.

Dem Schweißgerät 2 ist erfindungsgemäß ferner ein Empfänger 10 zugeordnet, und zweckmäßigerweise in das Gehäuse des Schweißgerätes mit den anderen Elektronikkomponenten integriert. Der Empfänger 10 ist Teil eines Positionierungssystems, und zwar bevorzugt des Global-Positioning-System, kurz GPS, welches eine exakte Feststellung und Ortung eines Objektes unter Einsatz von im Orbit installierten Satelliten ermöglicht. Die Signale der Satelliten und / oder besonderer Empfangs- und Sendeeinrichtungen auf der Erdoberfläche werden mittels einer Antenne 12 empfangen und im Empfänger 10 wird die exakte Position der Schweißverbindung und / oder des Schweißgerätes 2 auf der Erdoberfläche ermittelt. Vor allem werden Breitengrad und Längengrad aber auch die Höhe über dem Meeresspiegel und die Zeit ermittelt und gespeichert. Die mit dem Empfänger 10 erhaltenen Daten werden dem Speicher 6 zugeführt und den Daten des Schweißvorganges zugeordnet. Die vorzugsweise unter einer Job-Nummer gespeicherten schweißspezifischen Daten werden somit zumindest mit den geographischen Koordinaten ergänzt.

In einer zweckmäßigen Ausgestaltung enthält das Schweißgerät 2 ein Datenübertragungssystem 14, mittels welchem weitere Daten, wie insbesondere Straßenpläne, ladbar sind. Es gelangt vorzugsweise ein PCM-Datenübertragungssystem zum Einsatz. Dieses Datenübertragungssystem ermöglicht zusätzlich oder alternativ die Eingabe von Koordinaten und/oder Korrekturwerten und diesbezügliche Daten werden dem Speicher und/oder Rechner 6 zugeführt. Die Positionsbestimmung kann im Rahmen der Erfindung auch ausschließlich mittels der Übertragungseinheit 14 erfolgen.

Die im Rechner und / oder Speicher 6 bereitgehaltenen Daten, nämlich die Schweißdaten ebenso wie die Positionsdaten können über den Datenanschluß 8 bedarfsweise auf eine Übergabeeinheit 16 übertragen werden. Die Übertragung geschieht am einfachsten mitels eines bedarfsweise anschließbaren Kabels 18, doch kann auch ein direkter Steckeranschluß oder auch eine drahtlose Übertragung vorgesehen sein. Wesentlich ist, daß mittels der Übergabeeinheit die genannten Daten zwischengespeichert und vom Schweißgerät zu einem anderen Rechner oder dergleichen transportiert werden können. Die Übergabeeinheit 16 enthält in zweckmäßiger Weise ein beschreibbares und bei Bedarf löschbares Speichermedium, das insbesondere in nicht flüchtiger Form ausgeführt sein kann, wobei hier beispielshaft auf ein Magnetband, eine magnetische Diskette oder digitale Speicherbausteine verwiesen sei. Somit können von verschiedenen Schweißgeräten auf verschiedenen Baustellen die relevanten Schweißdaten ebenso wie Positionsdaten vom jeweiligen Schweißgerät problemlos abgefragt und auf einen zentralen Rechner bzw. zur zentralen Verwaltung und Bearbeitung übergeben werden.

In zweckmäßiger Weise ist ferner ein Display bzw. eine Anzeigeeinheit 20 anschließbar, und zwar bevorzugt an der Datenübertragungseinheit 14. Diese Anzeigeeinheit 20, welche als Bildschirm, LCD-Anzeige oder dergleichen ausgebildet ist, ermöglicht die Positionsdarstellung der Schweißverbindung, bevorzugt in Verbindung mit Stadtplänen, Lageplänen oder ähnlichem. Ferner ist die Anzeigeeinheit 20 erfindungsgemäß derart ausgebildet, daß Positionsdaten erfaßbar und in gleicher Weise wie über den Empfänger 10 in den Speicher oder Rechner 6 eingebbar sind und letztendlich den Schweißdaten zugeordnet werden. Somit kann problemlos die exakte Position des Schweißgerätes und / oder des Schweißfittings, der Armatur oder dergleichen sichtbar gemacht werden. Darüberhinaus ermöglicht die Anzeigeeinheit in besonders zweckmäßiger Weise eine Korrektur oder definierte Eingabe der Positionsdaten. Mit der Anzeigeeinheit können bei geringem Aufwand die mittels des Empfängers und der Antenne 12 erhaltenen Ortungsdaten bzw. geografischen Koordinaten abgeglichen werden.

In einer besonderen Weiterbildung ist eine Mappingeinheit 22 vorgesehen, welche zweckmäßig über die Datenübertragungseinheit 14 mit dem Schweißgerät 1 verbindbar ist. Diese Mappingeinheit 22 ermöglicht problemlos das Laden bzw. Eingeben von Stadtplänen, Verlegeplänen oder dergleichen, welche in der Anzeigeeinheit 20 darstellbar sind.

In einer weiteren Ausgestaltung der Erfindung ist die Antenne 12' mit dem Schweißkabel 3 gekoppelt. Bevorzugt ist die Antenne 12' ebenso wie die Stecker 7 am Ende des Schweißkabels 3 angeordnet. Ist das Schweißfitting oder dergleichen in einem relativ großen Abstand zum Schweißgerät angeordnet, weist also das Schweißkabel eine relativ große Länge auf, so ist die Antenne 12' gleichwohl in unmittelbarer Nähe des Fittings, so daß eine sehr exakte Positionsbestimmung gewährleistet ist.

Auch wenn die Integration des Empfängers 10 in das Schweißgerät 1 sich in bestimmten Fällen als zweckmäßig erwiesen hat, so kann der Empfänger 10' wahlweise auch als Modul außerhalb des Schweißgerätes 1, insbesondere als externer Modul, angeordnet sein, wobei über Kabel, Stecker oder dergleichen die Verbindung mit dem Schweißgerät 1 herstellbar ist.

### Bezugszeichenliste

- 1: Schweißgerät
- 2: Elektronikeinheit
- 3: Schweißkabel
- 4: Erfassungseinheit
- 5: Leseeinheit
- 6: Speicher / Rechner
- 7: Kontaktelement / Stecker
- 8: Datenanschluß
- 10: Empfänger
- 12: Antenne
- 14: PCM-Datenübertragungseinheit
- 16: Übergabeeinheit
- 18: Kabel
- 20: Anzeigeeinheit
- 22: Mappingeinheit

## Patentansprüche

1. Anordnung mit einem Schweißgerät, mittels welchem insbesondere Strom, Spannung und Zeit eines Schweißvorganges vorgebbar und speicherbar sind, wobei das Schweißgerät einen Speicher und/oder Rechner enthält,
dadurch gekennzeichnet,
daß den Schweißdaten Positionsdaten eines Ortungssystems zuordenbar sind.

2. Anordnung nach Anspruch 1, dadurch gekennzeichnet, daß das Schweißgerät (2) einen Empfänger (10) eines Ortungssystems, insbesondere eines Satellitenortungssystems, aufweist.

3. Anordnung nach Anspruch 1 oder 2, dadurch gekennzeichnet, daß das Schweißgerät (2) eine Datenübertragungseinheit (14) aufweist, welcher Positionsdaten zuführbar sind.

4. Anordnung nach Anspruch 2 oder 3, dadurch gekennzeichnet, daß den Schweißdaten die mittels des Empfängers (10) und/oder der Datenübertragungseinheit (14) geographischen Kooradinaten vorzugsweise die Längen- und Breitengrade, den Schweißdaten zugeordnet werden, und/oder daß diese Zuordnung mittels eines Rechners und/oder Speichers (6) durchführbar ist.

5. Anordnung nach einem der Ansprüche 1 bis 4, dadurch gekennzeichnet, daß die Schweißdaten ebenso wie die Positionsdaten auf eine Übergabeeinheit (16) übertragbar sind.

6. Anordnung nach einem der Ansprüche 1 bis 5, dadurch gekennzeichnet, daß das Ortungssystem eine Anzeigeeinheit (20) enthält, mittels welcher Positionsdaten korrigierbar und / oder eingebbar sind.

7. Anordnung nach Anspruch 6, dadurch gekennzeichnet, daß eine Mappingeinheit (22) der Anzeigeeinheit (20) zugeordnet ist.

8. Anordnung nach einem der Ansprüche 2 bis 7, dadurch gekennzeichnet, daß dem Empfänger (10) eine Antenne (12, 12') Zugeordnet ist und / oder daß die Antenne (12') am Ende oder am Endbereich eines Schweißkabels (3) angeordnet ist.

9. Anordnung nach einem der Ansprüche 1 bis 8, dadurch gekennzeichnet, daß eine Leseeinheit (5) vorgesehen ist und / oder daß die Leseeinheit (5) am Ende oder am Endbereich des Schweißkabels (3) angeordnet ist.
